# FASCICULE DE BREVET EUROPEEN

(11) **EP 3 942 195 B1**
(45) Date de publication et mention de la délivrance du brevet: **05.04.2023**
(21) Numéro de dépôt: 20707729.8
(22) Date de dépôt: 10.02.2020
(51) Int. Cl.: F16F 9/49, F16F 9/48, F16F 9/512, F16F 9/34

(54) **AMORTISSEUR AVEC BUTÉE DE FIN DE COURSE AUTO-ADAPTABLE EQUIPÉE DE PERÇAGES DANS LA TIGE**
FLUIDDÄMPFER AUFWEISEND EINEN SELBSTANPANSSENDEN ANSCHLAG MIT ÖFFNUNGEN AN DER STANGE
FLUID DAMPER FEATURING A SELF-ADAPTING END STOP WITH ORIFICES IN THE ROD

(30) Priorité: 22.03.2019 FR 1902988
(43) Date de publication de la demande: 26.01.2022
(73) Titulaire: PSA Automobiles SA, 78300 Poissy (FR)
(72) Inventeur: CAVAREC, Alan, 78350 LES LOGES EN JOSAS (FR); RIGUEL, Frederic, 92300 LEVALLOIS PERRET (FR); MONTEIL, Christophe, 91640 BRIIS SOUS FORGES (FR); ALLEGRE, Jean Marc, 91470 LIMOURS (FR); BONTRON, Francis, 92190 MEUDON (FR)
(86) Numéro de dépôt international: PCT/FR2020/050222
(87) Numéro de publication internationale: WO 2020/193882

(56) Documents cités:
- EP-A1- 3 406 931
- FR-A1- 3 050 000
- FR-A1- 3 050 496
- JP-A- H 109 328
- JP-A- S58 184 337
- JP-A- 2000 225 823
- JP-A- 2008 202 700
- US-A1- 2016 223 045

## Description

La présente invention concerne un amortisseur hydraulique disposant d'une butée de fin de course, ainsi qu'un véhicule automobile équipé de ce type d'amortisseur.

Les véhicules automobiles comportent généralement pour chaque roue une suspension comprenant un ressort de suspension, et un amortisseur télescopique hydraulique qui freine les mouvements de cette suspension. En particulier l'amortisseur peut comporter une butée hydraulique de fin de course, qui arrête le mouvement en bout de course pour éviter un choc sur une butée rigide.

Un type de butée hydraulique de fin de course réglable connu, présenté notamment par le document US-A-32077270, comporte une tige recevant une poussée axiale d'un mouvement à freiner, entraînant un piston coulissant dans un cylindre présentant une série de perçages répartis sur la longueur. Un système de commande manuelle disposé à l'extérieur du cylindre, permet de régler la fermeture de ces perçages afin d'ajuster le niveau de freinage de la butée.

Toutefois le réglage de ce type de butée ne comporte aucun automatisme permettant de s'adapter à différentes charges.

Un autre type de butée connu pour un amortisseur de suspension de véhicule, présenté notamment par le document FR-A1-3050000, comporte une tige de vérin comprenant à son extrémité inférieure un piston d'amortissement pour réaliser l'amortissement principal, se prolongeant vers le bas par une chemise qui en fin de course de compression vient s'ajuster autour d'un tube intérieur de butée.

La chemise comporte une série de perçages répartis axialement, qui sont fermés les uns après les autres lors de l'introduction du tube dans cette chemise afin de freiner de plus en plus fortement le transfert de fluide venant de la chambre extérieure formée autour de la chemise, vers la chambre en avant du piston à l'intérieur du tube. On obtient un freinage de plus en plus élevé de la fin de course de compression de l'amortisseur.

Un ressort de poussée disposé en dessous du piston principal, vient un peu avant la fin de course de l'amortisseur presser sur un boisseau coulissant axialement dans le tube de butée qui comporte des perçages additionnels à différentes hauteurs.

Une chambre de contrôle disposée dans le tube de butée en dessous du boisseau, comporte un passage limité de fluide vers l'extérieur afin de freiner le mouvement de descente de ce boisseau sous l'effet du ressort de poussée, et le mouvement de remontée de ce boisseau sous l'effet d'un ressort de rappel.

De cette manière un appui rapide du ressort de poussée sur le boisseau, lors d'un débattement important de la suspension réalisé de manière occasionnelle pour un véhicule peu chargé, ne descend pas le boisseau freiné par le fluide de la chambre de contrôle, présentant une dynamique lente. Les perçages du tube de butée restent ouverts, donnant une grande souplesse à la butée de fin de course ce qui apporte un confort élevé.

Un appui fréquent du ressort de poussée sur le boisseau avec un véhicule chargé, finit par descendre le boisseau qui ferme des perçages du tube de butée en durcissant plus fortement la butée de fin de course. On obtient une sécurité en évitant un talonnement de la suspension pour ce véhicule chargé. Toutefois ce type de butée comprenant un boisseau réglable intérieur au tube de butée, ne convient pas pour une butée hydraulique de fin de course comportant un piston venant à l'intérieur du tube de butée présentant des perçages répartis sur sa longueur.

Le document US 2016/0223045 A1 divulgue un amortisseur hydraulique selon le préambule de la revendication 1.

La présente invention a notamment pour but d'éviter ces inconvénients de la technique antérieure.

Elle propose à cet effet un amortisseur hydraulique comportant un piston d'amortisseur coulissant dans un tube intérieur, se déplaçant lors d'une compression dans une direction axiale appelée avant tournée vers un fond d'amortisseur, ce piston d'amortisseur supportant vers l'avant une tige comprenant à son extrémité un piston de butée rentrant dans un tube de butée de fin de course présentant des perçages de sortie de fluide, cet amortisseur étant remarquable en ce qu'il comporte sur la face avant du piston de butée un premier perçage comprenant une sortie en arrière de ce piston de butée, comporte sur le côté du piston de butée un deuxième perçage comprenant une sortie en arrière de ce piston de butée, et comporte un boisseau coulissant équipé d'une chambre de temporisation présentant un débit de fuite, qui dans une position avant ferme au moins une sortie des perçages et dans une position arrière relie ces sorties, le boisseau étant maintenu axialement entre un ressort de rappel avant prenant appui sur une partie fixe de l'amortisseur pour le rappeler dans la position arrière, et un ressort de rappel arrière prenant appui sur le piston d'amortisseur pour le rappeler dans la position avant.

Un avantage de cet amortisseur est que la chambre de temporisation à débit de fuite permet au boisseau d'obtenir une dynamique de déplacement lente sous l'effet des deux ressorts de rappel.

Dans le cas d'un véhicule peu chargé la force du ressort de rappel avant est faible, le boisseau est rappelé par le ressort arrière dans la position avant ce qui ferme la communication entre les deux perçages de la tige, en donnant une loi de freinage sur une grande course de la butée pour véhicule peu chargé, assurant le confort. Les fonctionnements rapides de la butée ne déplacent pas le boisseau à cause de sa dynamique lente.

Dans le cas d'un véhicule fortement chargé la pression du ressort de rappel avant s'appliquant pendant longtemps finit par déplacer le boisseau, ce qui met en communication les deux perçages. On obtient avec ces perçages communicant un freinage faible de la butée pour le début de sa course, tant que le deuxième perçage sur le côté du piston de butée n'est pas bouché par une descente suffisante de ce piston à l'intérieur du tube de butée. Les petites oscillations de la suspension avec le véhicule chargé sont peut freinées ce qui assure le confort.

Après avoir dépassé cette position le deuxième perçage est fermé, on obtient ensuite un freinage important de l'amortisseur pour éviter une arrivée brutale en fin de course.

L'amortisseur hydraulique selon l'invention peut comporter de plus une ou plusieurs des caractéristiques suivantes, qui peuvent être combinées entre elles.

Avantageusement, le boisseau présente une forme annulaire ajustée autour de la tige.

Dans ce cas, avantageusement dans la position arrière du boisseau, un volume de communication de ce boisseau disposé face à la tige relie les deux sorties des deux perçages formées sur le côté de cette tige. Avantageusement, l'extrémité arrière du boisseau rentre dans la chambre de temporisation qui est disposée en avant du piston d'amortisseur. Avantageusement, le boisseau comporte un plateau circulaire maintenu axialement entre les deux ressorts de rappel.

Avantageusement, les ressorts de rappel sont des ressorts hélicoïdaux guidés dans le tube intérieur.

L'invention a aussi pour objet un véhicule automobile équipé d'amortisseurs hydrauliques de suspension comprenant l'une quelconque des caractéristiques précédentes.

Avantageusement, le véhicule comportant au repos une charge dépassant un seuil de charge, la force résultante des ressorts de rappel dispose le boisseau dans sa position arrière.

L'invention sera mieux comprise et d'autres caractéristiques et avantages apparaîtront plus clairement à la lecture de la description ci-après donnée à titre d'exemple, en référence aux dessins annexés dans lesquels :
[Fig. 1] présente en coupe axiale la partie avant d'un amortisseur selon l'invention au repos, le véhicule étant à vide ;
[Fig. 2] présente cet amortisseur en fonctionnement au début de la butée de fin de course ;
[Fig. 3] présente l'amortisseur au repos le véhicule étant chargé ;
[Fig. 4] présente cet amortisseur en fonctionnement au début de la butée de fin de course ; et
[Fig. 5] présente cet amortisseur en fonctionnement au milieu de la butée de fin de course, le deuxième perçage venant de se fermer.

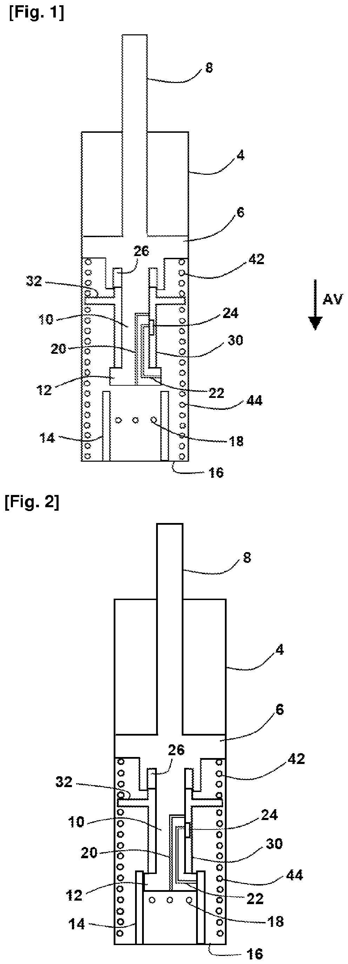

La figure 1 présente un amortisseur télescopique comportant du côté avant indiqué par la flèche AV, un tube intérieur 4 disposé dans un corps extérieur non représenté, contenant un piston d'amortisseur 6 fixé sur une tige principale 8, séparant deux chambres hydrauliques pour réaliser l'amortissement principal du mouvement de la suspension. Le volume entre le corps extérieur et le tube intérieur 4 forme une chambre de compensation contenant un gaz sous pression, qui reçoit le trop-plein de fluide venant du volume déplacé par l'entrée de la tige principale 8 dans l'amortisseur lors de sa compression.

La tige principale 8 comporte une tige de prolongation 10 en avant du piston d'amortisseur 6, comprenant à son extrémité avant un piston de butée 12 équipé sur son pourtour d'un joint d'étanchéité donnant un léger débit de fuite, qui rentre vers la fin de course de l'amortisseur dans un tube de butée 14 comprenant un fond d'extrémité avant 16 lié au tube intérieur 4 et au corps. Le tube de butée 14 peut comporter en particulier des fentes longitudinales partant de son extrémité arrière, couvrant près de la moitié de sa longueur, présentant une grande largeur à l'extrémité arrière qui se réduit progressivement vers l'avant. Le tube de butée 14 peut comporter de plus des séries de perçages du tube 18 disposées chacune dans un plan transversal, pour réaliser des lois de freinage adaptées à la position du piston de butée 12. Un boisseau 30 ajusté autour de la tige de prolongation 10 entre le piston d'amortisseur 6 et le piston de butée 12, comporte un plateau arrière circulaire 32 maintenu axialement entre deux ressorts hélicoïdaux de rappel, comprenant un ressort de rappel avant 44 prenant appui sur le fond d'extrémité 16 pour rappeler le boisseau dans une position arrière, et un ressort de rappel arrière 42 prenant appui sur le piston d'amortisseur 6 pour le rappeler dans une position avant.

L'extrémité arrière du boisseau 30 rentre dans une chambre de temporisation 26 formée à l'avant du piston d'amortisseur 6, présentant un débit de fuite limité qui freine fortement le coulissement du boisseau par rapport à ce piston, de manière à obtenir une dynamique lente de déplacement sous l'effet des différences de charge des deux ressorts 42, 44.

Les ressorts de rappel 42, 44 sont guidés dans le tube intérieur 4, ce qui assure un faible frottement et une absence de bruit.

La tige de prolongation 10 présente un premier perçage 20 comprenant une entrée sur la face avant du piston de butée 12, et une sortie débouchant sur le côté de cette tige entre le piston d'amortisseur 6 et le piston de butée. La tige de prolongation 10 comporte aussi un deuxième perçage 22 comprenant une entrée débouchant sur le côté du piston de butée 12, et une sortie débouchant sur le côté de cette tige en avant de la sortie du premier perçage 20.

Le boisseau 30 comporte sur sa face intérieure en contact avec la tige de prolongation 10, un volume formant une communication 24 qui dans la position avant de ce boisseau est en avant de la sortie du premier perçage 20 ce qui ferme cette sortie, et qui dans la position arrière de ce boisseau met en communication la sortie du premier perçage avec la sortie du deuxième perçage 22.

Le véhicule étant à vide l'assiette est haute et le ressort de rappel avant 44 n'est pas chargé, le ressort arrière 42 maintient le boisseau 30 dans sa position avant. Lors du roulage du véhicule des passages rapides de l'amortisseur sur la butée de fin de course avec une fréquence d'environ un Hertz qui est celle de la suspension, chargeant le ressort avant 44, ne modifient pas cette position du boisseau grâce à la dynamique lente de transfert du fluide hors de la chambre de temporisation 26.

La figure 2 présente l'amortisseur en début de sa fin de course, le piston de butée 12 étant entré dans le tube de butée 14. Le premier perçage 20 étant fermé, on a un freinage progressif sur toute la longueur du tube de butée 14 en utilisant tous ses perçages 18 répartis sur la longueur.

On obtient un niveau de confort élevé avec un freinage progressif sur la course complète de la butée de fin de course.

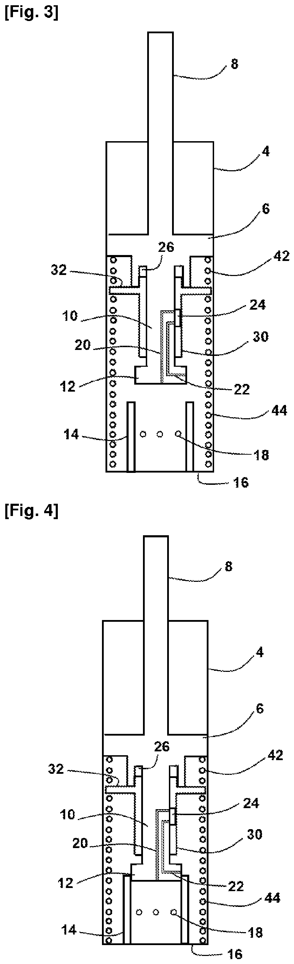

La figure 3 présente le véhicule chargé au repos, le piston de butée 12 étant dans une position plus basse. La pression du ressort de rappel avant 44 pousse le boisseau 30 vers l'arrière en comprimant le ressort de rappel arrière 42, ce qui déplace ce boisseau par rapport à la tige de prolongation 10, en alignant la communication 24 à la fois sur la sortie du premier perçage 20 et la sortie du deuxième perçage 22.

La figure 4 présente le roulage du véhicule avec des petites oscillations de la suspension, le piston de butée 12 pouvant entrer dans le tube de butée 14 jusqu'à ce que l'entrée du deuxième perçage 22 arrive à la limite de ce tube, comme présenté sur cette figure.

On obtient jusqu'à cette position un freinage très faible du piston de butée 12 grâce à la sortie du fluide hors du tube de butée 14 en passant successivement par le premier perçage 20 et le deuxième perçage 22. Les petites oscillations sont faiblement freinées ce qui assure le confort.

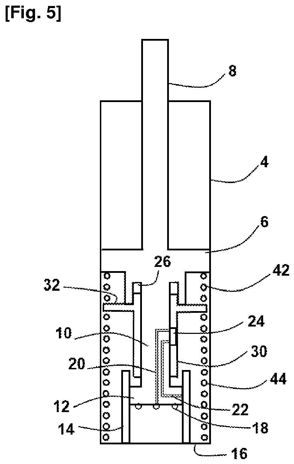

La figure 5 présente le véhicule avec l'amortisseur arrivant proche de la fin de course du véhicule chargé, l'entrée du deuxième perçage 22 rentrant dans le tube de butée 14, venant de se fermer.

On a alors un freinage important de la butée de fin de course sur une course réduite, donné par les perçages restant 18 du tube 14.

On obtient alors pour le véhicule en charge avec une assiette plus basse, à la fois un amortissement normal pour les petites oscillations et un freinage important sur la course restante pour les grandes oscillations, ce qui assure le confort et la tenue de route.

Après un déchargement du véhicule remontant son assiette, le piston d'amortisseur 6 remonte en réduisant la pression sur le ressort de rappel avant 44. Le boisseau 30 descend sous l'effet du ressort de rappel arrière 42, avec une dynamique lente pour revenir dans la position d'origine présentée figure 1.

On obtient de manière simple et efficace, sans liaison avec l'extérieur ni système électrique, un réglage passif auto-adaptatif de la butée de fin de course. On notera que la butée de fin de course comporte des composants en nombre réduit, ce qui lui donne un coût modéré.

En particulier avec le véhicule au repos, pour une charge de personnes ou de bagages dépassant un seuil de charge, l'assiette du véhicule descend et le boisseau 30 se met avec la temporisation dans sa position arrière donnant le réglage adapté de la butée de fin de course.

## Revendications

1. Amortisseur hydraulique comportant un piston d'amortisseur (6) coulissant dans un tube intérieur (4), se déplaçant lors d'une compression dans une direction axiale appelée avant (AV) tournée vers un fond d'amortisseur (16), ce piston d'amortisseur (6) supportant vers l'avant une tige (10) comprenant à son extrémité un piston de butée (12) rentrant dans un tube de butée de fin de course (14) présentant des perçages de sortie de fluide (18), **caractérisé en ce qu'**il comporte sur la face avant du piston de butée (12) un premier perçage (20) comprenant une sortie en arrière de ce piston de butée (12), comporte sur le côté du piston de butée (12) un deuxième perçage (22) comprenant une sortie en arrière de ce piston de butée (12), et comporte un boisseau (30) coulissant équipé d'une chambre de temporisation (26) présentant un débit de fuite, qui dans une position avant ferme au moins une sortie des perçages (20, 22) et dans une position arrière relie ces sorties, le boisseau (30) étant maintenu axialement entre un ressort de rappel avant (44) prenant appui sur une partie fixe de l'amortisseur pour le rappeler dans la position arrière, et un ressort de rappel arrière (46) prenant appui sur le piston d'amortisseur (6) pour le rappeler dans la position avant.

2. Amortisseur selon la revendication 1, **caractérisé en ce que** le boisseau (30) présente une forme annulaire ajustée autour de la tige (10).

3. Amortisseur selon la revendication 2, **caractérisé en ce que** dans la position arrière du boisseau (30), un volume de communication (24) de ce boisseau (30) disposé face à la tige (10), relie les deux sorties des deux perçages (20, 22) formées sur le côté de cette tige (10).

4. Amortisseur selon la revendication 2 ou 3, **caractérisé en ce que** l'extrémité arrière du boisseau (30) rentre dans la chambre de temporisation (26) qui est disposée en avant du piston d'amortisseur (6).

5. Amortisseur selon l'une quelconque des revendications précédentes, **caractérisé en ce que** le boisseau (30) comporte un plateau circulaire (32) maintenu axialement entre les deux ressorts de rappel (42, 44).

6. Amortisseur selon l'une quelconque des revendications précédentes, **caractérisé en ce que** les ressorts de rappel (42, 44) sont des ressorts hélicoïdaux guidés dans le tube intérieur (4).

7. Véhicule automobile équipé d'amortisseurs hydrauliques de suspension, **caractérisé en ce qu'**il comporte des amortisseurs selon l'une quelconque des revendications précédentes.

8. Véhicule automobile selon la revendication 7, **caractérisé en ce que** ce véhicule comportant au repos une charge dépassant un seuil de charge, la force résultante des ressorts de rappel (42, 44) dispose le boisseau (30) dans sa position arrière.

## Patentansprüche

1. Hydraulischer Stoßdämpfer mit einem in einem Innenrohr (4) gleitenden Stoßdämpferkolben (6), der sich bei einer Kompression in einer als vorne bezeichneten axialen Richtung (AV), die einem Stoßdämpferboden (16) zugewandt ist, bewegt, wobei dieser Stoßdämpferkolben (6) nach vorne eine Stange (10) trägt, die an seinem Ende einen Anschlagkolben (12) aufweist, der in ein Endlagerrohr (14) eingreift, das Fluidaustrittsbohrungen (18) aufweist, **dadurch gekennzeichnet, dass** er an der Vorderseite des Anschlagkolbens (12) eine erste Bohrung aufweist, die Ein hinterer Auslass des Anschlagkolbens (12) weist seitlich des Anschlagkolbens (12) eine zweite Bohrung (22) mit einem hinteren Auslass des Anschlagkolbens (12) auf und weist einen verschiebbaren Vorschub (30) mit einer eine Leckrate aufweisenden Verzögerungskammer (26) auf, der in einer vorderen Stellung wenigstens einen Auslass der Bohrungen (20, 22) verschließt und in einer hinteren Stellung diese Auslässe verbindet, wobei der Vorschub (30) axial zwischen einer an einem feststehenden Teil des Körpers anliegenden vorderen Rückstellfeder Feder gehalten ist Stoßdämpfer zum Rückstellen des Stoßdämpfers in die hintere Stellung und eine rückstellende Feder (46), die sich zum Rückstellen des Stoßdämpfers in die vordere Stellung auf dem Stoßdämpferkolben (6) abstützt.

2. Stoßdämpfer nach Anspruch 1, **dadurch gekennzeichnet, dass** die Hülse (30) eine ringförmige Form aufweist, die um die Stange (10) herum passt.

3. Stoßdämpfer nach Anspruch 2, **dadurch gekennzeichnet, dass** in der hinteren Stellung des Bolzens (30) ein dem Schaft (10) zugewandtes Verbindungsvolumen (24) dieses Bolzens (30) die beiden Ausgänge der beiden seitlich an diesem Schaft (10) ausgebildeten Bohrungen (20, 22) verbindet.

4. Stoßdämpfer nach Anspruch 2 oder 3, **dadurch gekennzeichnet, dass** das hintere Ende des Kükens (30) in die Verzögerungskammer (26) passt, die vor dem Stoßdämpferkolben (6) angeordnet ist.

5. Stoßdämpfer nach einem der vorhergehenden Ansprüche, **dadurch gekennzeichnet, dass** der Widerhaken (30) eine kreisförmige Platte (32) aufweist, die axial zwischen den beiden Rückstellfedern (42, 44) gehalten ist.

6. Stoßdämpfer nach einem der vorhergehenden Ansprüche, **dadurch gekennzeichnet, dass** die Rückstellfedern (42, 44) im Innenrohr (4) geführte Schraubenfedern sind.

7. Kraftfahrzeug mit hydraulischen Stoßdämpfern für die Aufhängung, **dadurch gekennzeichnet, dass** es Stoßdämpfer nach einem der vorhergehenden Ansprüche aufweist.

8. Kraftfahrzeug nach Anspruch 7, **dadurch gekennzeichnet, dass** das Fahrzeug im Ruhezustand eine Belastungsschwelle übersteigende Last aufweist, wobei die resultierende Kraft der Rückstellfedern (42, 44) den Scheffel (30) in seiner hinteren Stellung anordnet.

## Claims

1. Hydraulic damper comprising a damper piston (6) sliding in an inner tube (4), moving during compression in a so-called front axial direction (AV) turned towards a damper bottom (16), this damper piston (6) supporting towards the front a rod (10) comprising at its end a stop piston (12) entering into an end-of-travel stop tube (14) having fluid outlet holes (18),
**characterized in that** it comprises on the front face of the stop piston (12) a first hole (20) comprising an outlet at the rear of this stop piston (12), comprises on the side of the stop piston (12) a second bore (22) comprising an outlet at the rear of this stop piston (12), and comprises a sliding plug (30) equipped with a delay chamber (26) having a leakage flow, which, in a closed front position, at least one outlet of the bores (20, 22) and in a rear position connects these outlets, the plug (30) being held axially between a front return spring (44) bearing on a fixed part of the plug the damper for returning it to the rear position, and a rear return spring (46) bearing on the damper piston (6) for returning it to the front position.

2. Shock absorber according to claim 1, **characterized in that** the plug (30) has an annular shape fitted around the rod (10).

3. Shock absorber according to claim 2, **characterized in that**, in the rear position of the plug (30), a communication volume (24) of this plug (30) arranged facing the rod (10) connects the two outlets of the two bores (20, 22) formed on the side of this rod (10).

4. Shock absorber according to claim 2 or 3, **characterized in that** the rear end of the plug (30) enters the delay chamber (26) which is arranged in front of the shock absorber piston (6).

5. Shock absorber according to any one of the preceding claims, **characterized in that** the plug (30) comprises a circular plate (32) held axially between the two return springs (42, 44).

6. Shock absorber according to any one of the preceding claims, **characterized in that** the return springs (42, 44) are helical springs guided in the inner tube (4).

7. Motor vehicle equipped with hydraulic suspension dampers, **characterized in that** it comprises dampers according to any one of the preceding claims.

8. Motor vehicle according to claim 7, **characterized in that** this vehicle comprises at rest a load exceeding a load threshold, the resulting force of the return springs (42, 44) disposes the plug (30) in its rear position.
